# EUROPÄISCHE PATENTSCHRIFT

(11) **EP 1 059 151 B1**
(45) Veröffentlichungstag und Bekanntmachung des Hinweises auf die Patenterteilung: **04.08.2004**
(21) Anmeldenummer: 00109533.0
(22) Anmeldetag: 04.05.2000
(51) Int. Cl.: B27B 19/12, B23D 51/02, B23D 51/04

(54) **Handgeführte Laubsägemaschine mit Auflagefläche und Werkstückniederhalter**
Hand held coping saw with support surface and work piece hold down apparatus
Scie à chantourner à main avec surface de support et appareil d'assujettissement

(30) Priorität: 05.06.1999 DE 19925746
(43) Veröffentlichungstag der Anmeldung: 13.12.2000
(73) Patentinhaber: ROBERT BOSCH GMBH, 70442 Stuttgart (DE)
(72) Erfinder: Frech, Alfred, 70771 Leinfelden-Echterdingen (DE); Wiker, Juergen, 70771 Leinfelden-Echterdingen (DE); Keusch, Siegfried, 73779 Deizisau (DE)

(56) Entgegenhaltungen:
- US-A- 2 753 898
- US-A- 5 176 059

## Beschreibung

### Stand der Technik

Die vorliegende Erfindung geht aus von einer handgeführten Laubsägemaschine nach dem Oberbegriff des Anspruchs 1.

Durch die US 5,027,518 ist eine gattungsgemäße Laubsägemaschine bekannt, die einer manuell zu betätigenden Laubsäge ähnelt, wobei der typische U-förmige Bügel einen nach unten quer abstehenden Handgriff mit einem Motorgehäuse trägt und wobei die Rückseite des Handgriffs einen Schalter zur Steuerung der Energieversorgung des Motors trägt.

Die bekannte handgeführte Laubsägemaschine hat kein Stützmittel, das sich von oben auf das Werkstück stützt und dieses niederhält und gegenüber dem oszillierenden Laubsägeblatt fixiert, so daß ein besser kontrollierter, sicher geführter Sägeschnitt möglich ist.

### Vorteile der Erfindung

Die vorliegende Erfindung mit den Merkmalen des Anspruchs 1 hat den Vorteil, daß sie einen stempelartig auf ein zu bearbeitendes Werkstück gleitbar abstützbaren Niederhalter aufweist, mit dem das Werkstück lagegesichert bei seinem Eintreten zwischen die Arme der Laubsäge besonders gut kontrollierbar und damit präzise bearbeitbar ist.

Die erfindungsgemäße Laubsägemaschine hat außerdem den Vorteil, daß sie sehr leicht ist, bequem in der Hand liegt und besonders sicher kontrollierbar vom Bedienenden führbar ist.

Die Handhabungssicherheit wird dadurch verbessert, daß das pistolenartige Basisgehäuse an den Handgriff anschließend nach hinten verlängert ist und sich in der Bedienposition am Unterarm des Bedienenden abstützt.

Dadurch, daß die Arme des U-förmigen Bügels um ein Mehrfaches, insbesondere um das Doppelte länger sind als das Laubsägeblatt, können verhältnismäßig großflächige Werkstücke bis in die Mitte mit der Laubsäge bearbeitet werden, d.h. die maximale Schnittiefe in ein brettartiges Werkstück von dessen Rand aus ist verhältnismäßig hoch.

Dadurch, daß der Handgriff die Schalttaste des Ein- und Ausschalters des Motors vorn trägt, ist diese Schalttaste besonders gut, insbesondere mit dem Zeigefinger, handhabbar, wobei nasenartige gehäusefeste Vorsprünge die Schalttaste umrahmen und deren unbeabsichtigtes Betätigen erschweren.

Dadurch, daß das Basisgehäuse den Motor und Antriebsmittel zum Hin- und Herbewegen des Laubsägeblattes aufnimmt und dadurch, daß der obere Arm des Bügels an seinem freien Ende ein Endgehäuse trägt, das Spann- und Führungsmittel zum lösbaren Spannen des Laubsägeblatts aufnimmt, sind die darin kompakt und staubdicht enthaltenen Teile gegen Staub und Beschädigung besonders gesichert bzw. der Bedienende ist dadurch gegen Verletzung bei unbeabsichtigtem Berühren der bewegten Teile geschützt.

Dadurch, daß die Laubsägemaschine oben an ihrem Basisgehäuse eine mit Rillen strukturierte, zum unteren Arm oberhalb desselben fluchtende ebene Auflagefläche zum Abstützen eines Werstücks trägt, gegenüber der der Niederhalter verschiebbar einstellbar ist, ist die Laubsägemaschine gegenüber dem Werkstück besonders kontrolliert und geradlienig führbar, bzw. das zu bearbeitende Werkstück sowohl von oben als auch von unten abgestützt, so daß nahezu so sauber wie mit dem Lineal bzw. mit dem Zirkel geführt gesägt werden kann.

Dadurch, daß das Basisgehäuse der Laubsägemaschine insbesondere verrastbar, lösbar mit einem z. B. an einer Werkbank befestigbaren Sägetisch koppelbar ist, wobei der Handgriff den Sägetisch nach unten bequem greifbar überragt, kann die Laubsägemaschine mit dem daran befestigten Sägetisch als besonders genau positionierbares Handwerkzeug eingesetzt werden bzw. bei an eine Werkbank angeflanschtem Sägetisch als stationäres Gerät genutzt werden.

Dadurch, daß die Laubsägemaschine einen parallel zum Laubsägeblatt verschiebbaren Werkstückniederhalter trägt, der zugleich als Fingerabweiser dient, ist das zu bearbeitende Werkstück gegenüber der Laubsägemaschine besonders gut kontrollierbar festgelegt, so daß präzise Sägeschnitte geführt werden können.

Dadurch, daß der U-förmige Bügel aus Metall besteht, insbesondere Rohr mit kreisrundem oder ellipsenförmigem Querschnitt und daß das Basis- und Endgehäuse aus Kunststoff, insbesondere aus hälftig zusammensetzbaren Gehäuseschalen, bestehen, sind Robustheit und Genauigkeit infolge hoher seitliche Verformungssteifigkeit der Widerlager des Laubsägeblatts sowie geringes Gewicht, gute Handhabbarkeit durch ergonomische Formgebung der Laubsägemaschine miteinander vereint.

Dadurch, daß der Niederhalter mit einem Anschlag auf dem Werkstück gleitbar abstützbar ist, wobei der Anschlag an mindestens einer Gleitstange, insbesondere an deren freien Ende, sitzt und wobei die Gleitstange - in Vorschubrichtung. - vor dem Laubsägeblatt, insbesondere parallel zu diesem verläuft, ist bei unterschiedlichen Werkstückdicken die Niederhaltefunktion bequem anpaßbar gesichert. Dabei kann sich der Anschlag mit seiner weichen, planebenen Sohle an der Werkstückoberfläche beim Vorschub schonend abstützen. Außerdem dient die mindestens eine Gleitstange oberhalb des Anschlags als Schutz für den Bedienenden gegen versehentliches Berühren des Laubsägeblatts.

Dadurch, daß der Niederhalter eine zweite parallele Gleitstange hat, in die sie, insbesondere aus einem Stück bestehend, mit einem U-förmigen Bogen übergeht, ist der Anschlag besonders stabil und bequem verstellbar geführt, weil der U-förmige Bogen als Handgriff dient und zwei parallele Gleitstangen leichtgängiger längs verschiebbar sind als eine einzelne.

Dadurch, daß der aus Kunstoff bestehende Anschlagfuß Steckdome hat, die mit den freien Enden der aus Stahl bestehenden parallelen Gleitstangen zusammensteckbar sind, ist der Niederhalter besonders leicht montierbar und der Anschlag ersetzbar bzw. austauschbar, z.B. gegen andere Anschläge.

Dadurch, daß der Anschlagfuß parallel zur Auflagefläche des unteren Gehäuses U-förmig verläuft, wobei dessen Schenkel in Vorschubrichtung weisen, ist das Laubsägeblatt seitlich und hinten umgreifbar und dadurch sicher geführt, so daß die Auslenkung des Laubsägeblatts nach hinten begrenzt ist und damit die Gefahr verringert ist, daß es bei Überbelastung zerstört wird.

Dadurch, daß die Schenkel des Anschlags skispitzenartig nach oben gebogen sind, ist das zu bearbeitende Werkstück besonders oberflächenschonend niederhaltbar.

Dadurch, daß der Niederhalter ein Haltergehäuse aufweist, das an einem der Arme des U-förmig gebogenen Profils der Laubsägemaschine befestigbar ist, ist der Niederhalter als vormontierbare, vollständig funktionsbereite Baugruppe an die Laubsägemaschine montierbar.

Dadurch, daß das Haltergehäuse in ein am oberen Arm angeordnetes Endgehäuse montierbar ist, ist es besonders vorteilhaft in die Außenkontur der Laubsägemaschine integrierbar.

Dadurch, daß das Haltergehäuse Montagearme aufweist, insbesondere mit Schraubendurchtrittsbohrungen, ist der Werkstückniederhalter besonders einfach gegenüber dem Endgehäuse formschlüssig festlegbar.

Dadurch, daß das Haltergehäuse quer zu den Gleitstangen ein U-förmig gebogenes Federblech trägt, das die Gleitstangen im Ruhezustand festhält und durch Verschwenken eines der Schenkel diese zumindest in eine Schieberichtung freigibt, ist ein besonders einfacher Arretier- und Lösemechanismus zum Einstellen des Anschlagfußes geschaffen.

Dadurch, daß das Federblech in einem Einsteckschlitz am Haltergehäuse festlegbar ist und sich an den Gleitstangen unverlierbar festhält, indem es diese mit mindestens einer Arretierbohrung, vorzugsweise auch mit einer Gleitbohrung umgreift, ist der Niederhalter besonders einfach montierbar und dessen Einzelteile unverlierbar an den Gleitstangen gehalten.

Dadurch, daß mindestens einer der Schenkel des Federblechs mit einer Drucktaste auslenkbar ist, wobei sich die Taste mit Führungsbohrungen an den Gleitstangen unverlierbar verschiebbar festhalten, ist auch der Betätigungsmechanismus zum Einstellen des Niederhalters unverlierbar und einfach montierbar mit den Gleitstangen verbindbar.

Dadurch, daß sich die Drucktaste oben und unten an den Flachseiten des oberen Schenkels des Federblechs mit zwei Nasen punkt- oder linienförmig, insbesondere zwischen der Gleit- und der Arretierbohrung, abstützt, ist ein besonders einfacher und wirksamer Betätigungsmechanismus zum Lösen der Arretierung der Gleitstangen geschaffen.

Dadurch, daß die Gleitstangen rückgratartig das Haltergehäuse mit seinem Einzelteilen sowie die Drucktaste auffädelbar unverlierbar tragen, bildet der Niederhalter eine voll funktionsfähige vormontierte Baugruppe, die außer in Laubsägemaschinen auch in anderen Arbeitsgeräten einsetzbar ist.

### Zeichnung

Nachstehend ist die Erfindung an Hand eines Ausführungsbeispiels mit zugehörigen Zeichnungen erläutert.

Es zeigen
Fig. 1 eine räumliche Ansicht der erfindungsgemäßen handgeführten Laubsägemaschine von vorn links
Fig. 2 die mit einem Sägetisch verrastete Laubsägemaschine gemäß Figur 1 von vorn rechts
Fig. 3 eine räumliche Darstellung der vollständigen Baugruppe des Werkstückniederhalters seitlich von vorn rechts,
Fig. 4 einen Längsschnitt des Niederhalters gem. Fig. 3,
Fig. 5 eine räumliche Ansicht des Niederhalters seitlich rechts von hinten,
Fig. 6 die Einzelheit der U-förmigen Blattfeder des Niederhalters und
Fig. 7 eine räumliche Darstellung ausschnittweise des Endgehäuses der Laubsägemaschine halbseitig offen mit montagebereit eingelegtem Werkstückniederhalter.

### Beschreibung des Ausführungsbeispiels

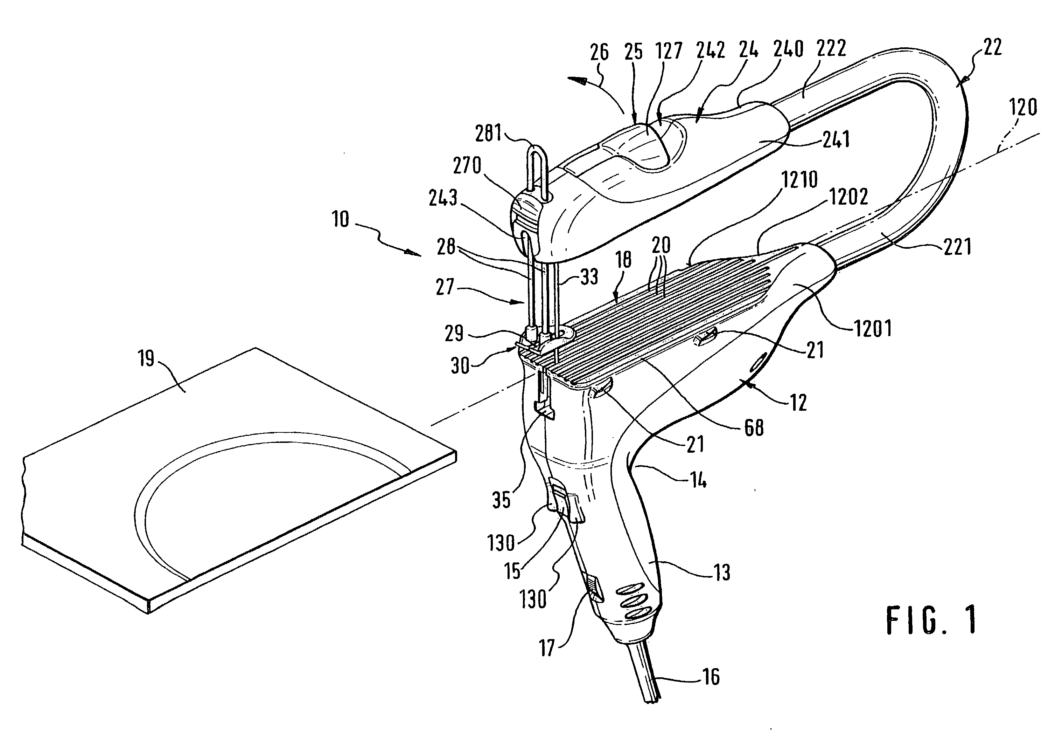

Die in Fig. 1 gezeigte Laubsägemaschine 10 besteht aus einem pistolenartigen unteren Basisgehäuse 12 mit einem quer nach unten abstehenden Handgriff 13. Von seinem Austrittsbereich aus dem Basisgehäuse 12 ist der Handgriff 13 nach hinten abgewinkelt angeordnet. Die hintere Kontur des Handgriffs 13 bildet im Austrittsbereich aus dem Gehäuse 12 eine konkav gewölbte Kehle 14, die waagerecht nach hinten als untere Außenkontur des Basisgehäuses 12 weitergeführt ist. Die Kehle 14 schmiegt sich in die Bedienhand und liegt dabei etwa mittig zwischen Daumen und Zeigefinger auf dieser bzw. in diese eingespannt. Dabei stützt sich der waagerecht verlaufende hintere Bereich des Basisgehäuses 12 auf dem Handrücken und dem Unterarm des Bedienenden ab und bildet einen verlängerten Stützhebel, so daß dadurch die Laubsäge 10 beim Sägen besonders kontrolliert handhabbar ist.

Der Handgriff 13 trägt vorn eine von aus dem Handgriff 13 tretenden, nasenartigen Vorsprüngen 130 seitlich eng umrahmte Schalttaste 15 zum Unterbrechen bzw. Schließen des Stromkreises. Unten aus dem Handgriff 13 tritt ein Netzanschlußkabel 16 zur Energieversorgung des im Inneren des Basisgehäuses 12 angeordneten, nicht dargestellten Motors.

Unterhalb der Schalttaste 15 ist am Handgriff 13 ein Stellrad 17 einer nicht dargestellten Regelelektronik zur Drehzahleinstellung des Motors angeordnet.

Das Basisgehäuse 12 besteht aus zwei längsgeteilten Halbschalen 1201, 1202 und trägt oben eine planebene, schiffsdeckartige Auflagefläche 18 mit Längsrillen 20, auf der ein Werkstück 19 zur Bearbeitung abstützbar ist.

Das Basisgehäuse 12 trägt auf beiden Seiten unterhalb eines umlaufenden Außenrandes 68 je zwei von einander beabstandete Spannclips 21, von denen nur die beiden auf der linken Seite angeordneten erkennbar sind.

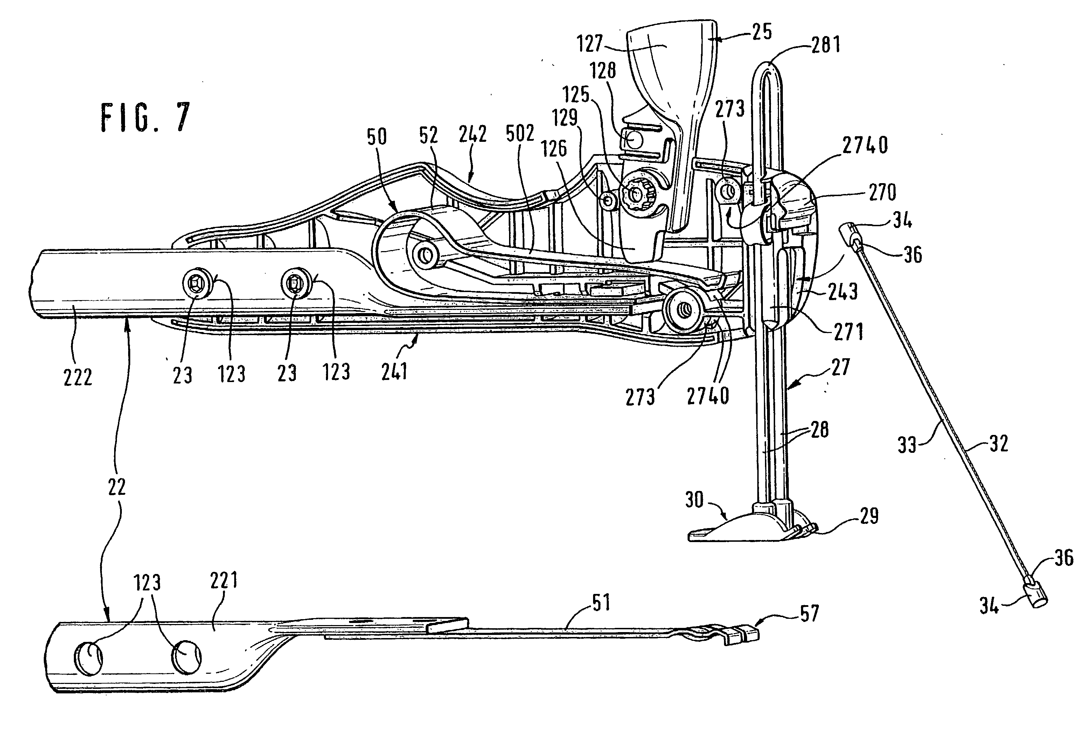

Aus dem Basisgehäuse 12 tritt nach hinten ein unterer Arm 221 eines U-förmigen Bügels 22 aus, der aus gebogenem Rohr besteht und von den Halbschalen 1201, 1202 dicht umgriffen wird. Der untere Arm 221 geht bogenförmig nach oben vorn in einen parallel zum unteren Arm 221 verlaufenden oberen Arm 222 über. Dieser obere Arm 222 trägt an seinem nach vorn gerichteten freien Ende ein Endgehäuse 24, das am Arm 222 über Befestigungsschrauben 23 (Fig. 7) fixiert ist und das aus zwei längsgeteilten Gehäuseschalen 240, 241 besteht. Das Endgehäuse 24 trägt einen von oben zugänglichen Spannhebel 25, dessen Griff 127 durch eine mulden- oder kerbenartige Vertiefung 242 mit dem Finger der Bedienhand untergreifbar ist und nach oben zum Öffnen in Richtung des Betätigungspfeils 26 verschwenkbar ist.

An seinem abgerundeten Frontende trägt das Endgehäuse 24 einen Werkstückniederhalter 27, der aus zwei runden Gleitstangen 28 besteht, die im Endgehäuse 24 gegenüber dem unteren Gehäuse 12 arretierbar verschieblich gelagert sind. Die beiden Gleitstangen 28 ragen oben und unten über das Endgehäuse 24 hinaus und sind oben durch einen U-förmigen Bogen 281 miteinander verbunden. Die Gleitstangen 28 tragen an ihrem unteren freien Ende, das der Auflagefläche 18 zugewandt ist, einen fußartigen Anschlag 30, der sich parallel zur Auflagefläche 18 hufeisenförmig nach hinten erstreckt mit einem nach vorn offenen Schlitz 29, in dem ein Laubsägeblatt 33, das mit seiner Zahnreihe 32 (Fig. 7) nach vorn weist, seitlich und von hinten geführt bzw. gegen zu weites seitliches oder nach hinten gerichtetes Auslenken gesichert ist.

Der Werkstückniederhalter 27 ist nach Niederdrücken seiner frontal aus dem Endegehäuses ragenden Drucktaste 270 aus seiner Arretierposition nach oben verschiebbar.

Das Laubsägeblatt 33 weist zwei Einspannenden auf (Fig. 7), die als aus Kunstoff eingespritzte Nippel 34 ausgestaltet sind und den Durchmesser des Sägeblatts 33 an dessen Einspannenden deutlich vergrößert, so daß diese in gabelartigen Widerlagern 56, 57 einhängbar und damit spannbar sind.

Das Endgehäuse 24 weist an seinem Frontbereich unterhalb der Drucktaste 270 ein schlitzartiges Montagefenster 243 auf, durch das hindurch das als Nippel 34 ausgestaltete Einspannende des Sägeblatts 33 in sein oberes Widerlager 56 einhängbar ist. Dazu korrespondierend weist das Basisgehäuse 12 einen frontalen Montageschlitz 35 auf, durch den das untere Einspannende des Laubsägeblatts 33 in Gestalt eines zweiten Nippels 34 einhängbar ist.

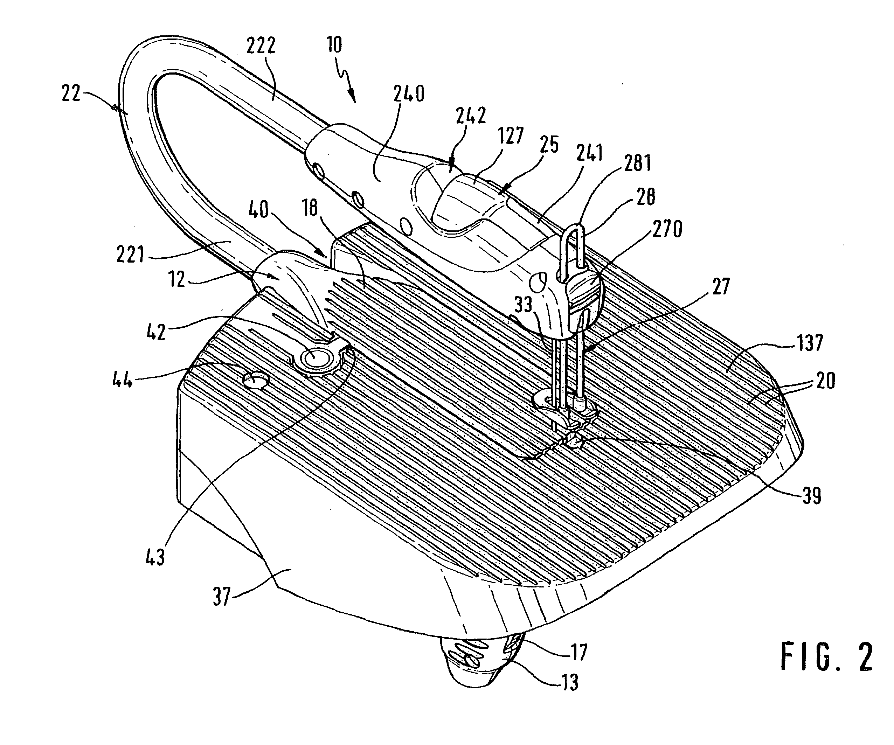

Fig. 2 zeigt die Laubsägemaschine 10 von rechts oben mit einem Sägetisch 37 gekuppelt, dessen obere, planebene Auflagefläche 137 bündig in die Auflagefläche 18 des Basisgehäuses 12 übergeht, wobei die Rillen 20 der Auflageflächen 137, 18 regelmäßig ineinander übergehen.

Der Sägetisch 37 weist vorn einen nicht dargestellten nach unten austretenden Absaugstutzen auf, der oben im Bereich der Auflagefläche 137 in ein Absaugloch 39 mündet, durch das hindurch beim Sägen gebildete Sägespäne absaugbar sind, wenn an den Absaugstutzen ein Saugschlauch eines Staubsaugers oder dgl. angeschlossen ist.

Der Sägetisch 37 trägt mittig in seinem hinteren Bereich eine U-förmige, in die Auflagefläche 137 hineinführende, nach unten durchgehende Ausnehmung 40, die der Außenkontur bzw. dem Außenrand 68 der Auflagefläche 18 des Basisgehäuses 12 entspricht. Die Ausnehmung 40 trägt oben auf gegenüberliegenden Seiten nicht dargestellte Längsführungen, die ein bajonettverschlußartiges Einklinken des Basisgehäuses 12 der Laubsägemaschine 10 in den Sägetisch 37 sowie dessen spielfreie Halterung darin ermöglichen.

Eine in die Auflagefläche 137 integrierte Arretiertaste 42 bildet einen Rastanschlag 43, der in eine korrespondierende Aussparung 1210 des Basisgehäuses 12 nahe der Auflagefläche 18 eingreift und das Basisgehäuse 12 und damit die Laubsägemaschine 10 gegenüber dem Sägetisch 37 lösbar festhält.

Die Auflagefläche 137 des Sägetischs 37 wird senkrecht nach unten von nach außen gleichmäßig beabstandeten Schraubenlöchern 44 durchtreten, durch die hindurch Schrauben steckbar sind, mit denen der Sägetisch 37 an einer festen Unterlage, beispielsweise Werkbank oder dgl. verschraubbar ist. Außerdem weist der Sägetisch 37 an seinem äußeren Rand hinten nicht dargestellte Klemmöffnungen auf - zum Eintritt einer Spannbacke einer nicht dargestellten Schraubzwinge, mit der er an einer festen Unterlage befestigbar ist.

Der Handgriff 13 ragt unterhalb des Sägetischs 37 hervor, so daß die Laubsägemaschine 10 mit gehaltertem Sägetisch 37 gemeinsam als Handwerkzeug einsetzbar ist. Damit ist die Laubsägemaschine 10 gegenüber dem Werkstück 19 besonders bequem so ausrichtbar, daß dieses rechtwinklig gegenüber dem Sägeblatt 33 bzw. der Auflagefläche 18, 137 positioniert ist.

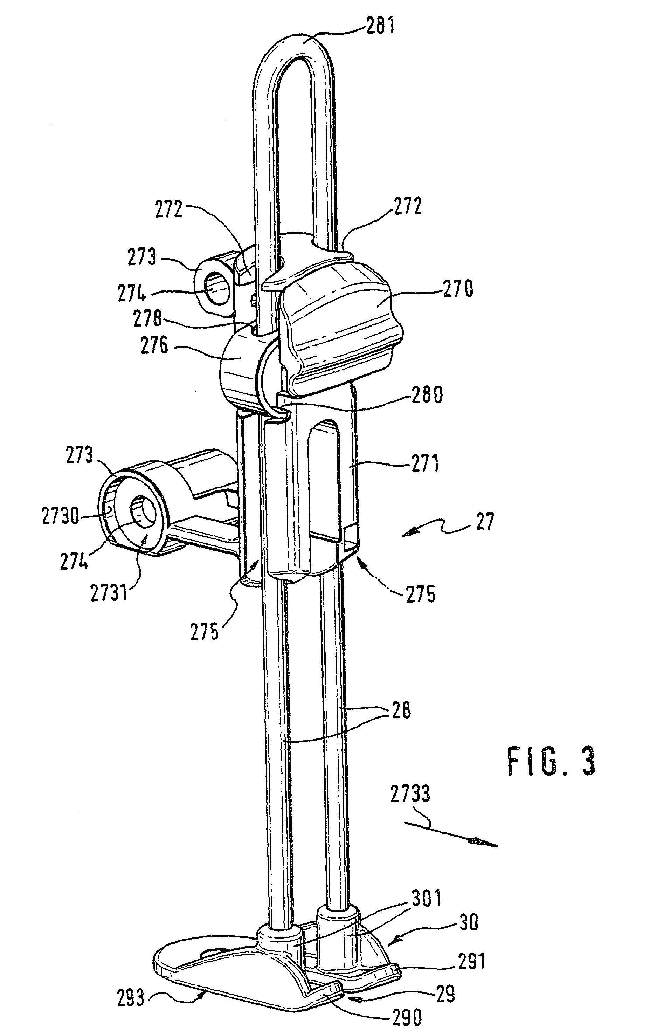

Fig. 3 zeigt den Werkstückniederhalter 27 als Einzelheit seitlich von rechts vorn mit zwei parallen, runden Gleitstangen 28, die unten an ihrem freien Ende einen Anschlag 30 tragen. Der Anschlag 30 hat Steckdome 301, in die die freien Enden der Gleitstangen 28 eingeschoben sind. Der Anschlag 30 ist mit seiner planebenen Sohle 293 rechtwinklig zu den Gleitstangen 28 angeordnet und verläuft in Vorschubrichtung gemäß Richtungspfeil 2733 U-förmig nach vorn offen.

Der zwischen den Schenkeln 290, 291 gebildete Schlitz umgreift das Sägeblatt 33 seitlich und von hinten (Fig. 1). Die Sohle 293 des Anschlagfußes 30 besteht aus Material, das weicher als Holz ist und damit beim Abstützen auf einem Werkstück 19 (Fig. 1) dessen Oberfläche schont. Darüberhinaus wirkt sich oberflächenschonend aus, daß die vorderen Enden der Schenkel 290, 291 des Anschlagfußes 30 skispitzenartig leicht nach oben gekrümmt sind.

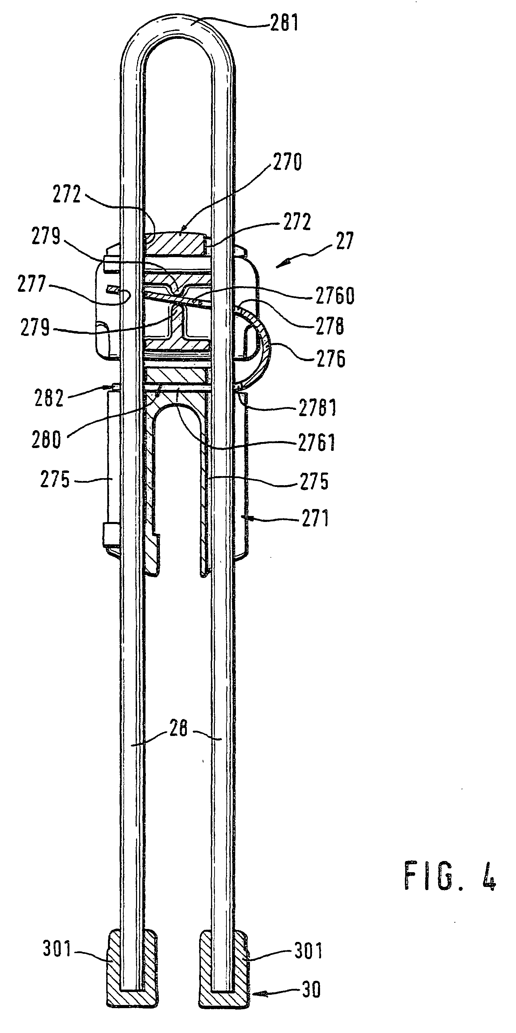

Zwischen den Gleitstangen 28 hält sich verschiebbar unverlierbar ein Haltergehäuse 271 des Werkstückniederhalters 27 fest, das mit Führungsschlitzen 275 die Gleitstangen 28 spielfrei umgreift und diese damit präzise längs führt. In einem Steckschlitz 280 des Haltergehäuses 271 ist ein Federblech 276 geschoben, das sich unverlierbar an den Gleitstangen 28 festhält und dadurch das Haltergehäuse 271 gegenüber den Gleitstangen 28 arretiert. Oberhalb des U-förmigen Federblechs 276 ist mittig zu den Gleitstangen 28 eine Drucktaste 270 angeordnet, die zum Zusammenpressen der Schenkel 2760, 2761 des U-förmigen Federblechs 276 dient (Fig. 4).

Mit der Rückseite des Haltergehäuses 271 sind ein unterer und ein oberer Montagearm 273 einstückig verbunden, die ein zylindrisches Endstück aufweisen, deren Achsen parallel zu der durch die Gleitstangen 28 aufgespannten Ebene verläuft.

Die zylindrische Endstücke der Montagearme 273 tragen mittige Durchtrittslöcher 274 für Schrauben oder dgl. Befestigungsmittel, wobei der untere Montagearm 273 darüber hinaus ein Auge 2731 aufweist, das durch einen axial vorgezogenen zur Durchtrittsbohrung 274 konzentrischen Rand 2730 gebildet wird und das dem Eintritt eines zylindrischen Teils des Endgehäuses 24 dient. Dadurch ist das Haltergehäuse 271 im Endgehäuse 24 formschlüssig zwischen dessen Halbschalen 241, 240 einsteckbar bzw. einspannbar.

Die Drucktaste 270 umgreift die Gleitstangen 28 unverlierbar mit Führungsbohrungen 272 und ist gemeinsam mit dem Haltergehäuse 271 an den Gleitstangen 28 verschiebbar gelagert.

Fig. 4 zeigt einen Längsschnitt des Werkstückniederhalters 27 mit den Gleitstangen 28 und mit den zuvor in Fig. 3 genannten Einzelheiten, die nicht nochmals vollständig genannt werden sollen.

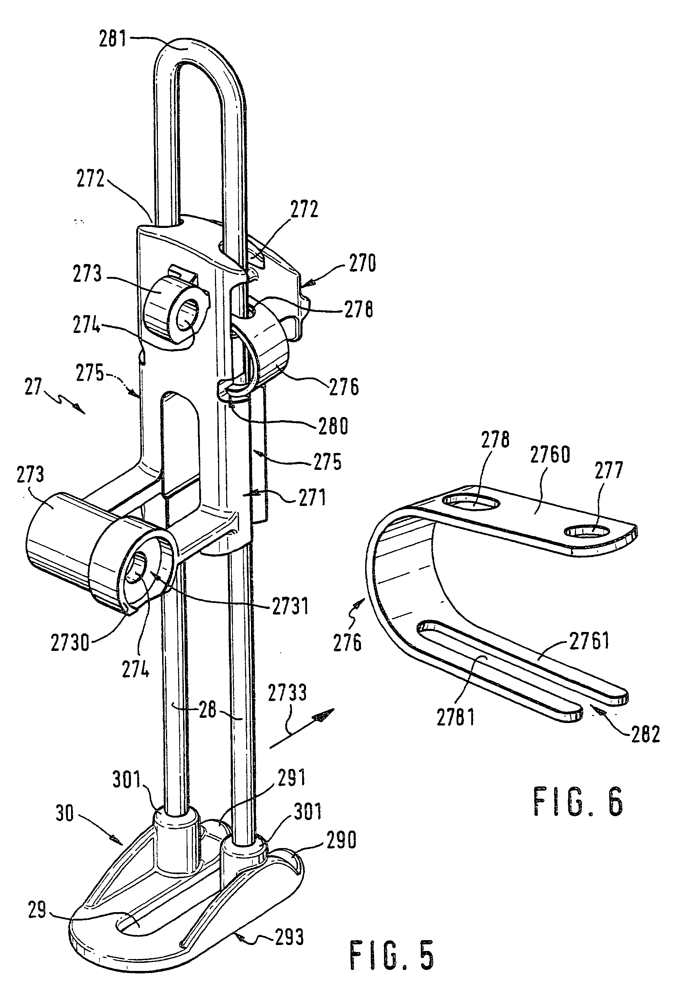

Deutlich wird die Anordnung des U-förmigen Federblechs 276 im Steckschlitz 280 des Haltergehäuses 271 mit seinem unteren Schenkel 2761. Der untere Schenkel 2761 ist gabelförmig geschlitzt (Fig. 6) und bildet dadurch eine langlochartige Durchtrittsöffnung 2781, mit der er die Gleitstangen 28 beabstandet umgreift.

Der obere Schenkel 2760 des Federblechs 276 umgreift die eine Gleitstange 28 mit einem verhältnismäßig engen Arretierloch 277 und die andere Gleitstange 28 mit einem die Gleitstange 28 nicht berührenden Gleitloch 278. Das Arretierloch 277 ist als Langloch mit parallel zum Schenkel 2760 ausgerichteter Längsachse ausgestaltet und hält sich mit seinem äußersten Rand an der Gleitstange 28 fest.

Zwischen dem Arretierloch 277 und dem Gleitloch 278 stützt sich die Drucktaste 270 oben und unten an der Flachseite des oberen Schenkels 2760 mit zwei gegenüberliegenden Nasen 279 jeweils linienförmig, quer zur Schenkelachse verlaufend, ab. Wird nun die Drucktaste 270 zum Anschlag 30 hin gedrückt, schwenkt der obere Schenkel 2760 des Federblechs 276 gleichsinnig nach unten. Dadurch gibt das Arretierloch 277 die eine Gleitstange 28 frei, so daß beide Gleitstangen 28 gegenüber der Taste 270 und dem Haltergehäuse 271 nach oben geschoben werden können.

Dazu wird mit einer Hand die Drucktaste 270 betätigt und mit der anderen Hand der Bogen 281 der Gleitstangen 28 nach oben gezogen.

In umgekehrter Verschiebrichtung des Werkstückniederhalters 27 muß die Druktaste 270 nicht betätigt werden, weil die Gleitstangen 28 gemeinsam mit dem Anschlag 30 dabei das Arretierloch entgegen der Verkant-Richtung passieren können und stets 270 frei nach unten zur Auflagefläche 18 hin verschiebbar sind.

Fig. 5 zeigt den Werkstückniederhalter 27 in einer räumlichen Ansicht von rechts hinten als einzelne Baugruppe, wobei die zu Fig. 3 aufgeführten Einzelheiten deutlich werden, insbesondere die U-förmige, hufeisenförmige Ausgestaltung des Anschlags 30 und - am Haltergehäuse 271 - die zylindrische Ausgestaltung der Endstücke der Montagearme 273.

Fig. 6 zeigt das Federblech 276 als Einzelheit räumlich dargestellt mit dem oberen und unteren Schenkel 2760, 2761, dem Gleit- und Arretierloch 278, 277 sowie dem Langloch 282.

Fig. 7 zeigt räumlich dargestellt die vorderen Bereiche des unteren und oberen Arms 221, 222 des U-förmigen Bügels 22 ohne das Basisgehäuse 12, nur mit der linken Halbschale des Endgehäuses 24 und dem Spannmechanismus 25 zum Lösen bzw. Befestigen des Laubsägeblattes 33.

Der untere Arm 221 weist an seinem freien Ende eine waagerechte Abflachung 54 auf, an der eine ebene Blattfeder 51 an Befestigungspunkten 59 befestigt, insbesondere genietet, ist. Die Blattfeder 51 trägt an ihrem als Widerlager für das Sägeblatteinspannende dienden freien Ende 57 einen mittigen Gabelschlitz 58 zum Durchtritt des Sägeblatts 33 und zum Festhalten dessen Nippels 34. Das freie Ende 57 der unteren Blattfeder 51 ist am äußersten Ende nach unten - und daran anschließend nach hinten dachartig nach oben - abgewinkelt, so daß auf der Unterseite der dachartigen Abwinklung in Querrichtung eine Rinne 62 gebildet wird, in die sich eine Schneide 61 des Nippels 34 gelenkartig pendelbar abstützt. Nach dem dachartigen Bereich setzt sich das freie Ende 57 der unteren Blattfeder 51 in einem kurzen, planebenen Bereich fort, an den sich eine nach oben gerichtete Wölbung 66 mit einem zentralen Längsschlitz 660 anschließt, der durch Stanzen bzw. Prägen einer nach unten gewölbten Lasche 64 gebildet wird. Die Wölbung 66 und die Lasche 64 bilden gemeinsam eine ovale Öse 65 zum Einhängen eines nichtdargestellten Pleuls, das die Drehbewegung des Motors in eine Auf- und Abbewegung der unteren Blattfeder 51 umwandelt.

Am oberen Arm 222 des Bügels 22 ist die linke Schale 241 des Endgehäuses 24 mittels Befestigungsschrauben 23 befestigt. Das freie Ende des oberen Arms 222 bildet wie das des oberen Arms 221 ebenfalls eine waagerechte Abflachung 53, an deren Oberseite an Befestigungspunkten 59 die obere Blattfeder 50 befestigt insbesondere genietet ist.

Die obere Blattfeder 50 erstreckt sich als nach rechts offenes U mit ihren Schenkeln 501, 502 nach außen - wie das freie Ende 53 des oberen Arms 222 -, wobei der untere, kurze Schenkel 501 am Arm 222 befestigt ist. Die Schenkel 501, 502 sind durch eine Wölbung 52 miteinander verbunden.

Das freie Ende 56 des oberen, längeren Schenkels 502 der Blattfeder 50 ist am freien Ende nach oben abgewinkelt und daran anschließend V-förmig nach unten geformt - spiegelbildlich zum äußeren Ende 57 der unteren Blattfeder 51 und bildet darin ebenfalls eine Rinne 62, die ebenso durch einen mittigen Gabelschlitz 58 über ihre Mitte hinaus durchtreten wird, so daß das Sägeblatt 33 mit seinem anderen Nippel 34 im Gabelschlitz 58 bzw. in der Rinne 62 des V-förmigen Bereichs gelenkig gelagert ist, spiegelbildlich zum unteren Einspannende 34 des Sägeblatts 33.

Die Arme 221, 222 tragen nahe ihren freien Enden Durchtrittslöcher 123, die quer zur durch den Bügel 22 aufgespannten Ebene verlaufen und dem Durchtritt der Befestigungsschrauben 23 zur Befestigung des Basis- bw. Endgehäuses 12, 24, insbesondere deren Halbschalen, dienen.

Dem oberen Schenkel 502 der oberen Blattfeder 50 ist ein als zweiarmiger Hebel ausgebildeter Spannhebel 25 zugeordnet, der um eine Schwenkachse 125 im Endgehäuse 24 mit seinem Griff 127 nach oben verschwenkbar ist, so daß sein Nocken 126 nach unten tritt und dabei den oberen Schenkel 502 der Blattfeder 50 zum unteren Arm 221 hin mitnimmt. Zum besseren Eingriff des Fingers des Bedienenden ist der Griff 127 des Spannhebels 25 ein nach hinten offener, rohrartiger Hohlkörper, in den der Bedienende mit einem Finger, geführt durch eine Vertiefung 242 in der äußeren Kontur des Endgehäuses 24, bequem eingreifen und nach oben verschwenken kann.

Im vorderen Bereich des Endgehäuses 24 ist der Werkstück-Niederhalter 27 mit dem fußartigen Anschlag 30, die Drucktaste 270, und dem Bogen 281 erkennbar

Der Spannhebel 25 ist mit seinem Griff 127 nach oben und mit seinen Nocken 126 nach unten geschwenkt und drückt den oberen Schenkel 502 der Blattfeder 50 nach unten. Der Spannhebel 25 taucht aus der konkaven Vertiefung 242 des Endgehäuses 24, in die er in der Spannposition bündig eintaucht.

Darüber hinaus ist ein zur Schwenkachse 125 benachbarter Raststift 129 der Gehäuseschale 241 gezeigt, in den eine hohlzylindrische Rastöffnung 128 des Spannhebels 25 bei Erreichen der Löseposition einrasten kann. Dabei ist das Sägeblatt 33 aus den Widerlagern bzw. den freien Enden 56, 57 der oberen und unteren Blattfedern 50, 51 gelöst und nach vorn entnommen bzw. bereit zum Wiedereinsetzen in die Widerlager. Dazu muß das Montagefenster 243 im Endgehäuse 24 bzw. das Montageschlitz 35 (Fig. 1) im Basisgehäuse 12 durchtreten werden.

Außerdem wird besonders deutlich bei Betrachtung des Werkstückniederhalters 27 die Anordnung der Montagearme 273 in entsprechenden backenartige Steckaufnahmen 2740 der Halbschalen 241, 240 des Endgehäuses 24. Durch Anfügen der rechten Gehäuseschale des Endgehäuses 24 ist damit das Haltergehäuse 271 zwischen den beiden Gehäuseschalen 241 und 240 spielfrei festgehalten.

In anderen Worten nochmals zur Funtktion des Werkstückniederhalters folgendes:

Das Federblech 276 verkantet sich an der Gleitstange 28 des Werkstückniederhalters 27, sobald eine Kraft diese nach oben zu verschieben sucht. Das bedeutet, daß der Werkstückniederhalter 27 die Gleitstangen 28 in eine Richtung selbsthemmend sperrt. Wirkt eine Kraft nach unten auf die Gleitstangen 28 entgegen der Verkantungsrichtung, gibt das Federblech 276 die Gleitstangen 28 frei, so daß der Niederhalter 27 frei nach unten verschiebbar ist.

Nur für den Fall, daß der Werkstückniederhalter 27 nach oben geschoben werden soll, muß die Drucktaste 270 betätigt werden. Dabei wird durch Niederdrücken des oberen Schenkels 2760 des Federblechs 276 das Arretierloch 277 aus der Verkantungsposition gegenüber der Gleitstange 28 gelöst und waagerecht gestellt, so daß dadurch die Gleitstange 28 freigegeben wird und der Werkstückniederhalter 27 bzw. dessen Anschlag 30 nach oben geschoben werden kann. Das Haltergehäuse 271 ist ein Kunstoffspritzteil. Es umgreift mit seinen Führungsschlitzen 275 die Gleitstangen 28 und dient als Wiederlager für den unteren Schenkel 2761 des Federblechs 276. Dadurch kann der Werkstückniederhalter 27 vorab als Baugruppe montiert werden, indem alle Einzelteile des Werkstückniederhalters 27 sozusagen auf die Gleitstangen unverlierbar aufgefädelt werden.

Die vormontierte Baugruppe des Werkstückniederhalters 27 wird seitlich in eine der oben offenen Gehäuseschalen 240, 241 des Endgehäuses 24 eingelegt, wobei die Montagearme 273 mit ihren Durchtrittsbohrungen 274 an domatigen Steckaufnahmen 2740 des Endgehäuses 24 aufgenommen werden und mit diesem verschraubbar sind. Durch Eingreifen der Montagearme 273 in die domartigen Vorsprünge 2740 des Endgehäuses 24 wird die Lagefixierung des Werkstückniederhalters 27 gegenüber dem Endgehäuse 24 erreicht.

## Patentansprüche

1. Handgeführte Laubsägemaschine (10) mit einem Laubsägeblatt (33), das zwischen zwei im wesentlichen parallelen, vorzugsweise aus einem U-förmigen Bügel (22), insbesondere Rohr, gebildeten oberen und unteren Armen (221, 222) an deren Enden lösbar spannbar ist und über einen von der Laubsägemaschine (10) getragenen Motor, insbesondere hin- und hergehend, antreibbar ist, wobei am einem der Arme (221, 222) ein Handgriff (13) angeordnet ist, **dadurch gekennzeichnet, daß** zwischen den beiden Armen (221, 222) ein stempelartig auf ein zu bearbeitendes Werkstück (19) abstützbarer Werkstückniederhalter (27) einstellbar angeordnet ist, der der Lagesicherung des Werkstücks (19) bei dessen Eintreten zwischen die Arme (221, 222) der Laubsägemaschine (10) bei deren Vorschub dient.

2. Laubsäge nach Anspruch 1, **dadurch gekennzeichnet, daß** der Werkstückniederhalter (27) einen fußartigen Anschlag (30) zum Abstützen auf dem Werkstück (19) hat, der an mindestens einer Gleitstange (28), insbesondere an deren freien Ende, angeordnet ist, wobei die Gleitstange (28) als Fingerschutz gegenüber der Verzahnung des Laubsägeblatts (33) dient.

3. Laubsäge nach Anspruch 2, **dadurch gekennzeichnet, daß** der Werkstückniederhalter (27) zwei parallele Gleitstangen (28) hat, die, insbesondere aus einem Stück bestehend, durch einen U-förmigen Bogen (281) miteinander verbunden sind.

4. Laubsäge nach Anspruch 3, **dadurch gekennzeichnet, daß** der insbesondere aus Kunststoff bestehende, Anschlag (30), vorzugsweise über Steckdome (301), mit den, vorzugsweise aus Stahl bestehenden, Gleitstangen (28), insbesondere mit deren freien Enden, zusammensteckbar ist.

5. Laubsäge nach Anspruch 1, **dadurch gekennzeichnet, daß** der Anschlag (30) das Laubsägeblatt (33), vorzugweise mit den Rändern eines Schlitzes (29), seitlich und hinten umgreift und dessen Auslenkungsbegrenzung nach hinten dient.

6. Laubsäge nach Anspruch 5, **dadurch gekennzeichnet, daß** der Werkstückniederhalter (27) ein Haltergehäuse (271) aufweist, das an einem der Arme (221, 222) befestigbar ist.

7. Laubsäge nach Anspruch 6, **dadurch gekennzeichnet, daß** der obere Arm (222) ein, insbesondere Spannmitteln (25) zum lösbaren Spannen des Laubsägeblatts (33) umgreifendes, Endgehäuse (24) trägt, das das Haltergehäuse (271) aufnimmt.

8. Laubsäge nach Anspruch 7, **dadurch gekennzeichnet, daß** das Haltergehäuse (271) die Gleitstangen (28), insbesondere in Führungsschlitzen (275), verschiebbar aufnimmt und Haltearme (273) insbesondere mit Schrauben-Durchtrittsbohrungen (274), aufweist, die gegenüber dem Endgehäuse (24) formschlüssig festlegbar sind.

9. Laubsäge nach Anspruch 8, **dadurch gekennzeichnet, daß** das Haltergehäuse (271) ein quer zu den Gleitstangen (28) angeordnetes, u-förmig gebogenes Federblech (276) trägt, das die Gleitstangen (28) im Ruhezustand festhält und durch Zusammendrücken der U-Schenkel diese zumindest in eine Schieberichtung freigibt.

10. Laubsäge nach Anspruch 9, **dadurch gekennzeichnet, daß** das Federblech (276) in einem Einsteckschlitz (280) am Haltergehäuse (271) festlegbar ist und sich an den Gleitstangen (28) unverlierbar festhält, indem es mindestens eine dieser mit einer Arretierbohrung (277), vorzugsweise die andere der Gleitstangen (28) mit einer Gleitbohrung (278), umgreift.

11. Laubsäge nach Anspruch 10, **dadurch gekennzeichnet, daß** die U-Schenkel des Federblechs (276) mittels einer Druckaste (270) zusammenpreßbar sind, wobei sich die Drucktaste (270) mit Führungsbohrungen (272) an den Gleitstangen (28) unverlierbar, verschiebbar festhält.

12. Laubsäge nach Anspruch 11, **dadurch gekennzeichnet, daß** sich die Druckaste (270) oben und unten an den Flachseiten des oberen Schenkels (2761) des Federblechs (276) mit je einer Nase (279) punkt- oder linienförmig zwischen der Gleit- (278) und der Arretierbohrung (277) abstützt.

13. Laubsäge nach Anspruch 10, **dadurch gekennzeichnet, daß** der Bogen (281) als Handgriff zum Verstellen des Werkstückniederhalters (27) dient.

14. Laubsäge nach einem der vorhergehenden Ansprüche, **dadurch gekennzeichnet, daß** die Laubsäge (10) an einem Basisgehäuse (12) oben eine, insbesondere mit Rillen strukturierte, vorzugsweise zum unteren Arm (221) fluchtende, ebene Auflagefläche (18) zum Abstützen des Werkstücks (19) trägt, gegenüber der der Niederhalter (27), insbesondere der Anschlag (30), verschiebbar ist.

## Claims

1. Hand-held powered fretsaw (10) having a fretsaw blade (33) which can be releasably clamped between two essentially parallel top and bottom arms (221, 222), preferably formed from a U-shaped frame (22), in particular a tube, at their ends and can be driven, in particular in a reciprocating manner, via a motor carried by the powered fretsaw (10), a handle (13) being arranged on one of the arms (221, 222), **characterized in that** a workpiece hold-down device (27) which can be supported in a punch-like manner on a workpiece (19) to be machined is arranged in an adjustable manner between the two arms (221, 222) and serves to secure the workpiece (19) in position when it enters between the arms (221, 222) of the powered fretsaw (10) during the feed of the latter.

2. Fretsaw according to Claim 1, **characterized in that** the workpiece hold-down device (27) has a foot-like stop (30) for supporting on the workpiece (19), this stop (30) being arranged on at least one sliding rod (28), in particular at its free end, the sliding rod (28) serving as finger protection relative to the tooth system of the fretsaw blade (33).

3. Fretsaw according to Claim 2, **characterized in that** the workpiece hold-down device (27) has two parallel sliding rods (28) which, in particular consisting of one piece, are connected to one another by a U-shaped bend (281).

4. Fretsaw according to Claim 3, **characterized in that** the stop (30), in particular made of plastic, can be assembled, preferably via insertion domes (301), together with the sliding rods (28), in particular with their free ends, the sliding rods (28) preferably being made of steel.

5. Fretsaw according to Claim 1, **characterized in that** the stop (30), preferably with the edges of a slot (29), encloses the fretsaw blade (33) laterally and at the rear and serves to limit its deflection towards the rear.

6. Fretsaw according to Claim 5, **characterized in that** the workpiece hold-down device (27) has a holder housing (271) which can be fastened to one of the arms (221, 222).

7. Fretsaw according to Claim 6, **characterized in that** top arm (222) carries an end housing (24) which encloses in particular clamping means (25) for releasably clamping the fretsaw blade (33) and accommodates the holder housing (271).

8. Fretsaw according to Claim 7, **characterized in that** the holder housing (271) accommodates the sliding rods (28) in a displaceable manner, in particular in guide slots (275), and has holding arms (273) which in particular have screw through-holes (274) and can be secured relative to the end housing (24) in a positive-locking manner.

9. Fretsaw according to Claim 8, **characterized in that** the holder housing (271) carries a spring plate (276) which is arranged transversely to the sliding rods (28), is bent in a U shape, holds the sliding rods (28) in position in the rest state and releases the latter, at least in one sliding direction, by pressing the U legs together.

10. Fretsaw according to Claim 9, **characterized in that** the spring plate (276) can be secured in an insertion slot (280) on the holder housing (271) and is captively retained on the sliding rods (28) by enclosing at least one of the latter by means of a locking hole (277) and preferably the other by means of a sliding hole (278).

11. Fretsaw according to Claim 10, **characterized in that** the U legs of the spring plate (276) can be pressed together by means of a pushbutton (270), the pushbutton (270) being captively retained on the sliding rods (28) in a displaceable manner by means of guide holes (272).

12. Fretsaw according to Claim 11, **characterized in that** the pushbutton (270), by means of a respective nose (279), is supported at the top and bottom on the flat sides of the top leg (2760) of the spring plate (276) in a point-like or linear manner between the sliding hole (278) and the locking hole (277).

13. Fretsaw according to Claim 10, **characterized in that** the bend (281) serves as a handle for adjusting the workpiece hold-down device (27).

14. Fretsaw according to one of the preceding claims, **characterized in that** the fretsaw (10), on a base housing (12), has at the top a flat supporting surface (18) which is structured in particular with grooves, is preferably in alignment with the bottom arm (221) and is intended for supporting the workpiece (19), and relative to which the workpiece hold-down device (27), in particular the stop (30), is displaceable.

## Revendications

1. Scie sauteuse à main (10) comprenant une lame de scie sauteuse (33) qui peut être tendue de façon démontable entre deux bras supérieur et inférieur (221, 222) à leurs extrémités, sensiblement parallèle, formés à partir d'un arceau en forme de U (22) de préférence en tube, et qui peut être entraînée, en particulier en mouvement alternatif, au moyen d'un moteur qui est porté par la scie sauteuse (10), dans laquelle une poignée (13) est disposée sur l'un des bras (221, 222),
**caractérisée en ce que**
entre les deux bras (221, 222) est disposé, de façon réglable, un serre-flan (27) du type poinçon, qui peut être appuyé sur une pièce (19) à travailler, et qui sert à stabiliser la position de la pièce (19) introduite entre les bras (221, 222) lors de la poussée de la scie sauteuse (10).

2. Scie sauteuse selon la revendication 1,
**caractérisée en ce que**
le serre-flan (27) comprend une butée (30) en forme de pied destinée à s'appuyer sur la pièce (19), et disposée sur au moins une tige coulissante (28), en particulier à l'extrémité libre de cette tige, la tige coulissante (28) servant de protection pour les doigts vis-à-vis de la denture de la lame de scie sauteuse (33).

3. Scie sauteuse selon la revendication 2,
**caractérisée en ce que**
le serre-flan (27) possède deux tiges coulissantes parallèles (28) qui, étant réalisées en particulier en une seule pièce, sont reliées l'une à l'autre par un étrier en forme de U (281).

4. Scie sauteuse selon la revendication 1,
**caractérisée en ce que**
la butée (30), qui est en particulier réalisée en matière plastique, peut être assemblée par emboîtement, de préférence par l'intermédiaire de dômes d'emboîtement (301), avec les tiges coulissantes (28) qui sont de préférence faites d'acier, en particulier avec les extrémités libres de ces dernières.

5. Scie sauteuse selon la revendication 1,
**caractérisée en ce que**
la butée (30) encadre la lame de scie sauteuse (33), latéralement et par l'arrière, de préférence avec les bords d'une fente (29), et sert à la limitation de l'excursion de cette lame vers l'arrière.

6. Scie sauteuse selon la revendication 5,
**caractérisée en ce que**
le serre-flan (27) présente un boîtier de serre-flan (271) qui peut être fixé à l'un des bras (221, 222).

7. Scie sauteuse selon la revendication 6,
**caractérisée en ce que**
le bras supérieur (222) porte un boîtier d'extrémité (24) qui entoure en particulier des moyens de tension (25) destinés à la tension desserrable de la lame de scie sauteuse (33), et qui reçoit le boîtier de serre-flan (271).

8. Scie sauteuse selon la revendication 7,
**caractérisée en ce que**
le boîtier de serre-flan (271) reçoit les tiges coulissantes (28), en particulier dans des fentes de guidage (275), en la laissant mobile en translation, et présente des bras de retenue (273), en particulier munis de perçages de passage de vis (274) qui peuvent être fixés par complémentarité de forme par rapport au boîtier d'extrémité (24).

9. Scie sauteuse selon la revendication 8,
**caractérisée en ce que**
le boîtier de serre-flan (271) porte une plaque formant ressort (276) recourbée en forme de U, disposée transversalement aux tiges coulissantes (28), qui maintient les tiges coulissantes (28) dans l'état de repos, et qui, par rapprochement des branches du U, libère ces dernières, du moins dans une direction de translation.

10. Scie sauteuse selon la revendication 9,
**caractérisée en ce que**
la plaque formant ressort (276) peut être fixée dans une fente d'emboîtement (280) prévue sur le boîtier du presseur (271) et s'attache de façon imperdable aux tiges coulissantes (28) par le fait qu'elle encadre au moins une de ces tiges coulissantes (28) par un perçage d'arrêt (277) et de préférence l'autre des tiges coulissantes (28) par un perçage de coulissement (278).

11. Scie sauteuse selon la revendication 10,
**caractérisée en ce que**
les branches de U de la plaque formant ressort (276) peuvent rapprochées l'une de l'autre au moyen d'un bouton poussoir (270), le bouton poussoir (270) s'attachant de façon imperdable et coulissante aux tiges coulissantes (28) au moyen de perçages de guidage (272).

12. Scie sauteuse selon la revendication 11,
**caractérisée en ce que**
le bouton poussoir (270) prend appui en haut et en bas contre les cotés plats de la branche supérieure (2761) de la plaque formant ressort (276), à chaque fois par une dent (279), par contact ponctuel ou linéaire entre le perçage de coulissement (278) et le perçage d'arrêt (277).

13. Scie sauteuse selon la revendication 10,
**caractérisée en ce que**
l'arceau (281) sert de poignée pour le réglage du serre-flan (27).

14. Scie sauteuse selon une des revendications précédentes,
**caractérisée en ce que**
la scie sauteuse (10) porte, sur un boîtier de base, en position haute, une surface de portée plane (18), qui est structurée en particulier avec des sillons, qui est de préférence de niveau avec le bras inférieur (221), pour l'appui de la pièce (19), par rapport à laquelle le serre-flan (27), en particulier la butée (30), peut être déplacé en translation.
